# EUROPÄISCHE PATENTSCHRIFT

(11) **EP 3 122 967 B1**
(45) Veröffentlichungstag und Bekanntmachung des Hinweises auf die Patenterteilung: **25.02.2026**
(21) Anmeldenummer: 15711134.5
(22) Anmeldetag: 18.03.2015
(51) Int. Cl.: E05B 81/20, E05B 81/14, E05B 81/22, E05B 85/10, E05B 81/06

(54) **KRAFTFAHRZEUGSCHLOSSANORDNUNG**
MOTOR VEHICLE LOCK ASSEMBLY
AGENCEMENT DE SERRURE DE VÉHICULE AUTOMOBILE

(30) Priorität: 22.03.2014 DE 102014205371
(43) Veröffentlichungstag der Anmeldung: 01.02.2017
(73) Patentinhaber: Brose Schliesssysteme GmbH & Co. KG, 42369 Wuppertal (DE)
(72) Erfinder: WIRTHS, Rainer, 42329 Wuppertal (DE)
(74) Vertreter: Gottschald, Jan
(86) Internationale Anmeldenummer: PCT/EP2015/055676
(87) Internationale Veröffentlichungsnummer: WO 2015/144526

(56) Entgegenhaltungen:
- EP-A2- 1 191 172
- DE-A1- 10 123 187
- DE-A1- 102011 055 506
- DE-A1- 19 700 887
- DE-A1- 19 800 803
- DE-A1- 19 841 309
- DE-U1- 29 812 121

## Beschreibung

Die Erfindung betrifft eine Kraftfahrzeugschlossanordnung gemäß dem Oberbegriff von Anspruch 1, eine Verschlusselementanordnung gemäß dem Oberbegriff von Anspruch 12 und ein Verfahren für den Betrieb einer Kraftfahrzeugschlossanordnung gemäß dem Oberbegriff von Anspruch 15.

Die in Rede stehende Kraftfahrzeugschlossanordnung ist mit einem Kraftfahrzeugschloss und mit einem Schließkeil, Schließkloben, o. dgl. ausgestattet und kann bei allen Arten von Verschlusselementen eines Kraftfahrzeugs Anwendung finden. Dazu gehören insbesondere Seitentüren, Hecktüren, Heckklappen, Heckdeckel oder Motorhauben. Diese Verschlusselemente können grundsätzlich auch nach Art von Schiebetüren ausgestaltet sein.

Die bekannte Kraftfahrzeugschlossanordnung (DE 296 24 351 UI), von der die Erfindung ausgeht, weist ein Kraftfahrzeugschloss mit den Schließelementen "Schlossfalle" und "Sperrklinke" auf, die in üblicher Weise miteinander wechselwirken. Die Schlossfalle lässt sich mittels der Sperrklinke in einer Vorschließstellung und einer Hauptschließstellung halten. Ein Ausheben der Sperrklinke führt zur Auflösung des haltenden Eingriffs, so dass die Schlossfalle in ihre Offenstellung schwenken kann. Für das motorische Ausheben der Sperrklinke ist bei der bekannten Kraftfahrzeugschlossanordnung ein Öffnungshilfsantrieb vorgesehen.

Dadurch, dass die Sperrklinke bei der bekannten Kraftfahrzeugschlossanordnung mittels des Öffnungshilfsantriebs motorisch aushebbar ist, kann auf einen Türaußengriff zum Öffnen des Verschlusselements grundsätzlich verzichtet werden. Beispielsweise kann das motorische Ausheben der Sperrklinke mittels eines Funkschlüssels ausgelöst werden. Dennoch finden in Kombination mit der bekannten Kraftfahrzeugschlossanordnung stets die üblichen Türaußengriffe Anwendung, nämlich, um eine Eingriffsfläche für die Hand des Benutzers bei der manuellen Verstellung des Verschlusselements bereitstellen zu können. Die Realisierung solcher Türaußengriffe, die an der Außenhaut des Verschlusselements angeordnet sind, ist aerodynamisch nachteilig, führt zu Verletzungsrisiken im Crashfall, schränkt die Gestaltungsfreiheit ein und ist mit beträchtlichen Kosten verbunden.

Die EP 1 191 172 A2 betrifft ein Kraftfahrzeugtürverschluss, welcher mit einer Schlossfalle, einer Sperrklinke zur Sicherung der Schlossfalle und einem Sperrklinkenantrieb ausgerüstet ist. Die Schlossfalle lässt sich über die Sperrklinke mittels des Sperrklinkenantriebs in eine Aushubstellung überführen. Dabei kommt es zu einer Spaltbildung zwischen Kraftfahrzeugtür und Karosserie, die ein Hintergreifen der Kraftfahrzeugtür erlaubt. Zusätzlich kann für diese Funktion noch ein separater Schlossfallenantrieb vorgesehen sein.

Die DE 197 00 887 A1 bezieht sich auf einen Verschluss insbesondere für eine Heckklappe eines Fahrzeugs, der ebenfalls eine Schlossfalle und eine damit in bekannter Weise zusammenwirkenden Sperrklinke. Hierbei wirkt eine von einem Drehantriebsmotor angetriebene Steuerkurve auf ein separates Verschlusselement, das wiederum mit der Schlossfalle auf einer gemeinsamen Welle gelagert ist. Über den Drehantriebsmotor kann das separate Verschlusselement eine Spaltbildung zwischen Kraftfahrzeugtür und Karosserie bewirken.

Die DE 298 12 121 U1 betrifft einen Verschluss für Heckklappen, Türen, Motorhauben o. dgl. mit einem bei Verschlussbetätigung durch einen Spalt zwischen Dichtung und Gegendichtungsfläche austretenden Handgriff, wobei zur Spaltbildung ein separates Huborgan vorgesehen ist.

Die DE 198 00 803 A1 bezieht sich auf einen Verschluss insbesondere für eine Heckklappe eines Fahrzeugs, der ebenfalls eine Schlossfalle und eine damit in bekannter Weise zusammenwirkende Sperrklinke gemäß dem Oberbegriff von Anspruch 1 offenbart.

Der Erfindung liegt das Problem zugrunde, die bekannte Kraftfahrzeugschlossanordnung derart auszugestalten und weiterzubilden, dass eine optimierte Realisierung einer Eingriffsfläche für eine Hand des Benutzers bei geringen Kosten ermöglicht wird.

Das obige Problem wird bei einer Kraftfahrzeugschlossanordnung gemäß dem Oberbegriff von Anspruch 1 durch die Merkmale des kennzeichnenden Teils von Anspruch 1 gelöst.

Wesentlich ist die grundsätzliche Überlegung, dass die Kraftfahrzeugschlossanordnung, insbesondere das Kraftfahrzeugschloss, mit einem Verstellantrieb ausgestattet sein kann, der eine beschränkte Verstellung des Verschlusselements in dessen Öffnungsrichtung bewirkt. Damit lässt sich zwischen Verschlusselement und Kraftfahrzeugkarosserie ein Eingriffsspalt erzeugen, der zusammen mit einer entsprechenden Handeingriffsanordnung einen Ersatz für einen üblichen, auf einer Türaußenhaut angeordneten Türaußengriff bilden kann.

Im Einzelnen wird vorgeschlagen, dass die Kraftfahrzeugschlossanordnung, insbesondere das Kraftfahrzeugschloss, einen Verstellantrieb zur Ausübung einer Antriebskraft auf das Verschlusselement in dessen Öffnungsrichtung aufweist, so dass im montierten Zustand der Kraftfahrzeugschlossanordnung das Verschlusselement in einem motorischen Aufstellvorgang aus einer Schließstellung heraus in eine Spaltstellung verstellbar ist und dadurch ein Eingriffsspalt zwischen Verschlusselement und Kraftfahrzeugkarosserie erzeugbar ist.

Mit der vorschlagsgemäßen Lösung lässt sich die Funktion des Türaußengriffs in einen Bereich zwischen dem Verschlusselement und der Kraftfahrzeugkarosserie verlegen, der ausschließlich bei in der Spaltstellung befindlichem Verschlusselement von außen zugänglich ist. Hierfür kann eine für den Eingriffsspalt hindurch von außen zugängliche Handeingriffsanordnung vorgesehen sein, wie noch erläutert wird. Der Begriff "außen" ist hier stets auf den Außenbereich des Kraftfahrzeugs bezogen. Die Handeingriffsanordnung ist in diesem Sinne vom Außenbereich des Kraftfahrzeugs aus zugänglich.

Bei der besonders bevorzugten Ausgestaltung gemäß Anspruch 6 kommt dem Verstellantrieb eine Doppelfunktion zu, nämlich einerseits die Funktion der Umsetzung des Aufstellvorgangs und andererseits die Funktion der Umsetzung eines Zuziehvorgangs. Ein solcher Zuziehvorgang ist eine Komfortfunktion, bei der das Verschlusselement motorisch gegen die Türdichtungskraft in ihrer Hauptschließstellung verstellt wird. Diese Doppelnutzung des Verstellantriebs ist kostengünstig und gleichzeitig in kompakter Bauweise realisierbar.

Vorschlagsgemäß ist der Aufstellvorgang über eine motorische Verstellung der Schlossfalle des Kraftfahrzeugschlosses realisiert. Bei einer Ausgestaltung gemäß Anspruch 6 ist der Zuziehvorgang über eine motorische Verstellung der Schlossfalle des Kraftfahrzeugschlosses realisiert. Damit kann der Schlossfalle eine dreifache Funktion zukommen, nämlich die Funktion des Haltens und Freigebens eines Schließkeils o. dgl., die Funktion der Verstellung des Verschlusselements in Schließrichtung im Rahmen des Zuziehvorgangs und die Funktion der Verstellung des Verschlusselements in Öffnungsrichtung im Rahmen des Aufstellvorgangs. Dies führt wiederum zu einer hohen Kosteneffizienz sowie einer hohen Kompaktheit.

Nach einer weiteren Lehre gemäß Anspruch 12, der eigenständige Bedeutung zukommt, wird eine Verschlusselementanordnung mit einem Verschlusselement und einer dem Verschlusselement zugeordneten, vorschlagsgemäßen Kraftfahrzeugschlossanordnung beansprucht.

Wesentlich nach der weiteren Lehre ist die grundsätzliche Überlegung, dass eine Handeingriffsanordnung durch eine geringfügige Verstellung des Verschlusselements selbst zugänglich und wieder unzugänglich gemacht werden kann. Im Einzelnen wird vorgeschlagen, dass am Verschlusselement eine Handeingriffsanordnung vorgesehen ist, die bei in der Schließstellung befindlichem Verschlusselement durch das Zusammenwirken von Verschlusselement und Kraftfahrzeugkarosserie nicht zugänglich und bei in der Spaltstellung entstehendem Eingriffsspalt zwischen Verschlusselement und Kraftfahrzeugkarosserie, insbesondere durch den Eingriffsspalt hindurch, zugänglich ist. Auch nach der weiteren Lehre ergeben sich zahlreiche neue Möglichkeiten für die Gestaltung der Handeingriffsanordnung als Ersatz für den üblichen Türaußengriff. Auf alle Ausführungen zu der vorschlagsgemäßen Kraftfahrzeugschlossanordnung, die geeignet sind, die Verschlusselementanordnung zu erläutern, darf verwiesen werden.

Bei der besonders bevorzugten Ausgestaltung gemäß Anspruch 13 ist die Handeingriffsanordnung im Bereich der an dem Eingriffsspalt angrenzenden Stirnseite 3a des Verschlusselements angeordnet. Mit "Stirnseite" ist stets die Seite des Verschlusselements gemeint, die bei in der Hauptschließstellung befindlichem Verschlusselement unmittelbar benachbart zu einer Fläche der Kraftfahrzeugkarosserie, insbesondere einer Fläche eines Türrahmens o. dgl., angeordnet ist.

Nach einer weiteren Lehre gemäß Anspruch 15, der ebenfalls eigenständige Bedeutung zukommt, wird ein Verfahren für den Betrieb einer vorschlagsgemäßen Kraftfahrzeugschlossanordnung beansprucht.

Wesentlich nach der weiteren Lehre ist die Überlegung, dass im Rahmen eines Öffnungsvorgangs des Verschlusselements mittels einer Steuerungsanordnung ein motorischer Aufstellvorgang gesteuert wird, in dem das Verschlusselement mittels des Verstellantriebs aus einer Schließstellung heraus in die Spaltstellung verstellt wird und dadurch ein Eingriffsspalt zwischen Verschlusselement und Kraftfahrzeugkarosserie erzeugt wird. Gemäß Anspruch 18 wird das Verschlusselement anschließend manuell, vorzugsweise frei von dem Verstellantrieb, weiter in Öffnungsrichtung des Verschlusselements verstellt. Ein derartig halbautomatischer Öffnungsvorgang ist konstruktiv leicht umzusetzen und stellt dennoch einen hohen Benutzungskomfort bereit.

Bei der weiter bevorzugten Ausgestaltung gemäß Anspruch 17 geht dem Aufstellvorgang ein Ausheben der Sperrklinke, insbesondere mittels eines Öffnungshilfsantriebs, voraus. Dadurch ist es ohne weiteres möglich, dass, wie oben angesprochen, eine motorische Verstellung der Schlossfalle für die Umsetzung des Aufstellvorgangs genutzt wird. Auf alle Ausführungen zu der Funktionsweise der Kraftfahrzeugschlossanordnung darf verwiesen werden.

Im Folgenden wird die Erfindung anhand einer lediglich Ausführungsbeispiele darstellenden Zeichnung näher erläutert. In der Zeichnung zeigt
- Fig. 1: ein Kraftfahrzeug mit einer vorschlagsgemäßen Verschlusselementanordnung, die mit einer vorschlagsgemäßen Kraftfahrzeugschlossanordnung ausgestattet ist, a) bei in der Hauptschließstellung befindlichem Verschlusselement und b) bei in der Spaltstellung befindlichem Verschlusselement,
- Fig. 2: die Schließelemente der vorschlagsgemäßen Kraftfahrzeugschlossanordnung a) bei in der Vorschließstellung befindlicher Schlossfalle und b) bei in der Hauptschließstellung befindlicher Schlossfalle,
- Fig. 3: die Schließelemente einer vorschlagsgemäßen Kraftfahrzeugschlossanordnung a) bei in der Offenstellung befindlicher Schlossfalle und b) in der Spaltstellung befindlicher Schlossfalle, und
- Fig. 4: eine weitere Ausführungsform einer vorschlagsgemäßen Verschlusselementanordnung bei in der Spaltstellung befindlichem Verschlusselement.

Es darf vorab darauf hingewiesen werden, dass in der Zeichnung nur die Komponenten der vorschlagsgemäßen Kraftfahrzeugschlossanordnung dargestellt sind, die für die Erläuterung der Lehre notwendig sind.

Die vorschlagsgemäße Kraftfahrzeugschlossanordnung 1 ist einem mit einer Kraftfahrzeugkarosserie 2 verstellbar gekoppelten Verschlusselement 3 zugeordnet. Bei dem Verschlusselement 3 handelt es sich hier und vorzugsweise um eine Seitentür eines Kraftfahrzeugs. Die vorschlagsgemäße Kraftfahrzeugschlossanordnung 1 lässt sich aber auch auf alle anderen denkbaren Verschlusselemente eines Kraftfahrzeugs anwenden. Dazu gehören insbesondere Hecktüren, Heccklappen, Heckdeckel oder Motorhauben.

Hier und vorzugsweise ist das als Seitentür ausgestaltete Verschlusselement 3 um eine im Wesentlichen vertikal ausgerichtete Schwenkachse 4 schwenkbar. Grundsätzlich kann das Verschlusselement 3 aber auch nach Art einer Schiebetür ausgestaltet sein.

Die Kraftfahrzeugschlossanordnung 1 weist ein Kraftfahrzeugschloss 5 auf, das im montierten Zustand vorzugsweise an dem Verschlusselement 3 angeordnet ist. Alternativ kann es auch vorgesehen sein, dass das Kraftfahrzeugschloss 5 an der Kraftfahrzeugkarosserie 2 angeordnet ist.

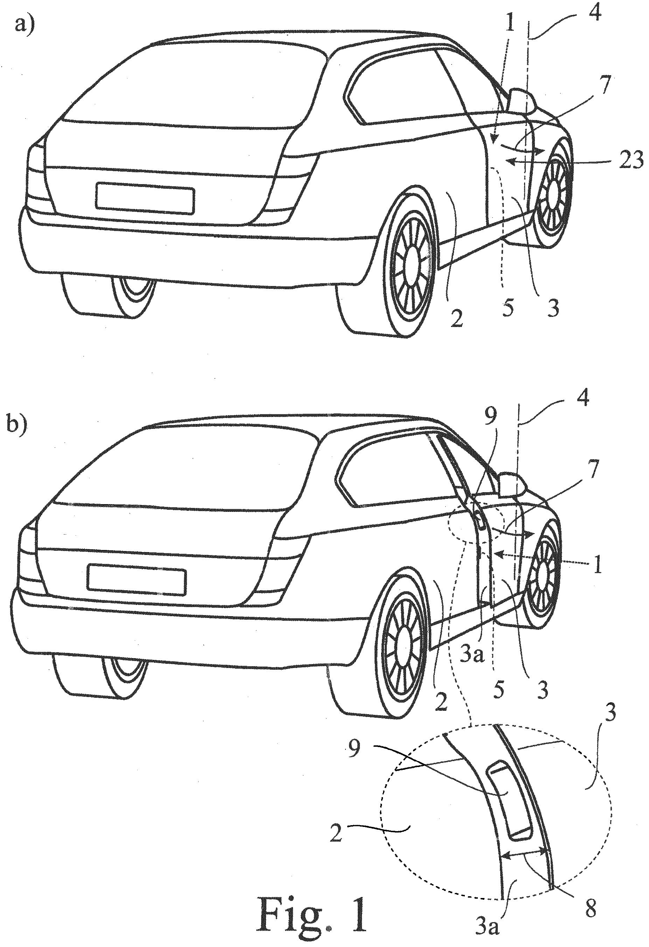

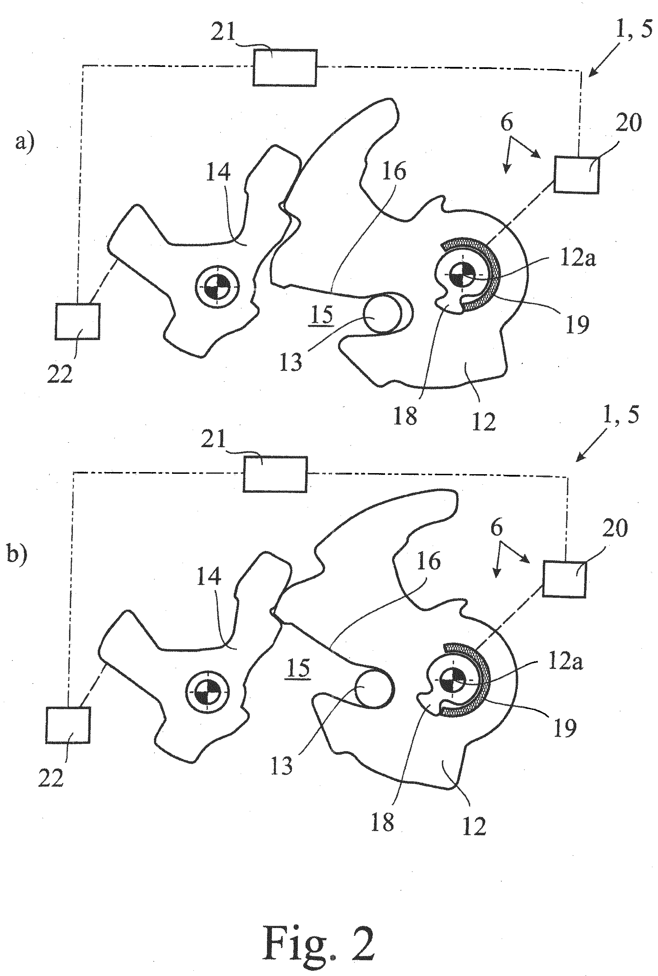

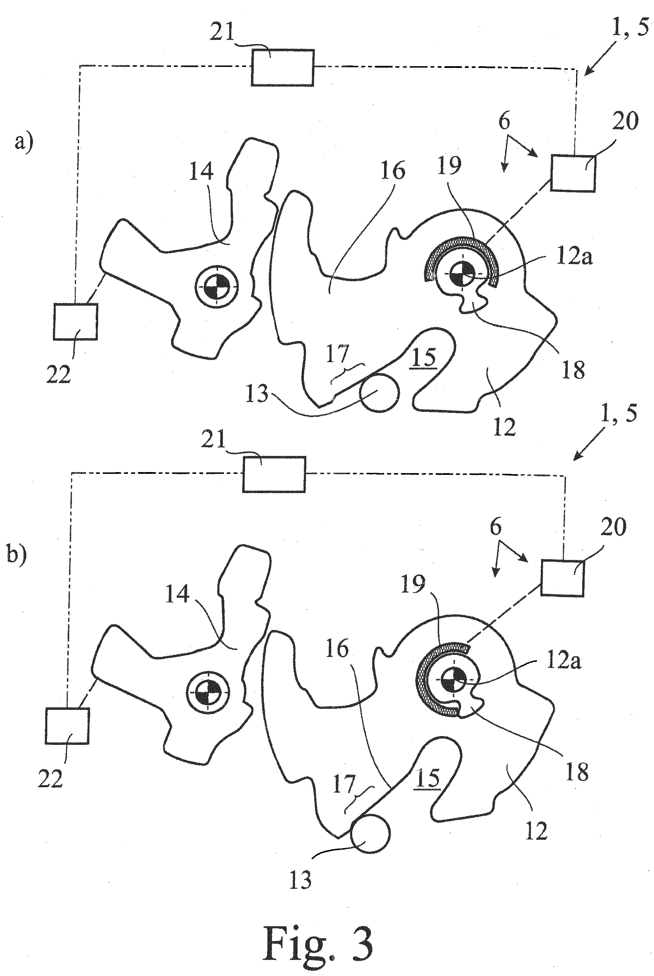

Die Kraftfahrzeugschlossanordnung 1, hier und vorzugsweise das Kraftfahrzeugschloss 5, weist einen Verstellantrieb 6 auf, der in den Fig. 2 und 3 lediglich angedeutet ist. Der Verstellantrieb 6 dient der Ausübung einer Antriebskraft auf das Verschlusselement 3 in dessen Öffnungsrichtung 7. Mit anderen Worten, drückt der Verstellantrieb 6 im montierten Zustand der Kraftfahrzeugschlossanordnung 1 auf das Verschlusselement 3 in dessen Öffnungsrichtung 7. Damit lässt sich das Verschlusselement 3 mittels des Verstellantriebs 6 in einem motorischen Aufstellvorgang aus einer in Fig. 1a dargestellten Schließstellung heraus in eine in Fig. 1b dargestellte Spaltstellung verstellen, wodurch ein Eingriffsspalt 8 zwischen Verschlusselement 3 und Kraftfahrzeugkarosserie 2 erzeugbar ist. Der Eingriffsspalt 8 erstreckt sich aufgrund der Schwenkbarkeit des Verschlusselements 3 entlang der Öffnungsrichtung 7 des Verschlusselements 3.

Erfindungsgemäß ist der Verstellantrieb 6 von dem Schlossgehäuse des Kraftfahrzeugschlosses 5 aufgenommen, dass auch die Schlossfalle 12 aufnimmt. Nicht im Rahmen der Erfindung kann der Verstellantrieb 6 auch außerhalb des Schlossgehäuses angeordnet sein und insbesondere über einen Bowdenzug mit dem Kraftfahrzeugschloss 5 im Übrigen gekoppelt sein.

Hier und vorzugsweise lässt sich das Verschlusselement 3 nach dem motorischen Aufstellvorgang frei von dem Verstellantrieb 6 manuell weiter in Öffnungsrichtung 7 des Verschlusselements 3 verstellen. Eine antriebstechnische Kopplung zwischen dem Verstellantrieb 7 und dem Verschlusselement 3, insbesondere zwischen der Schlossfalle 12 und einem noch zu erläuternden Schließkeil 13 o. dgl., besteht dann nicht mehr.

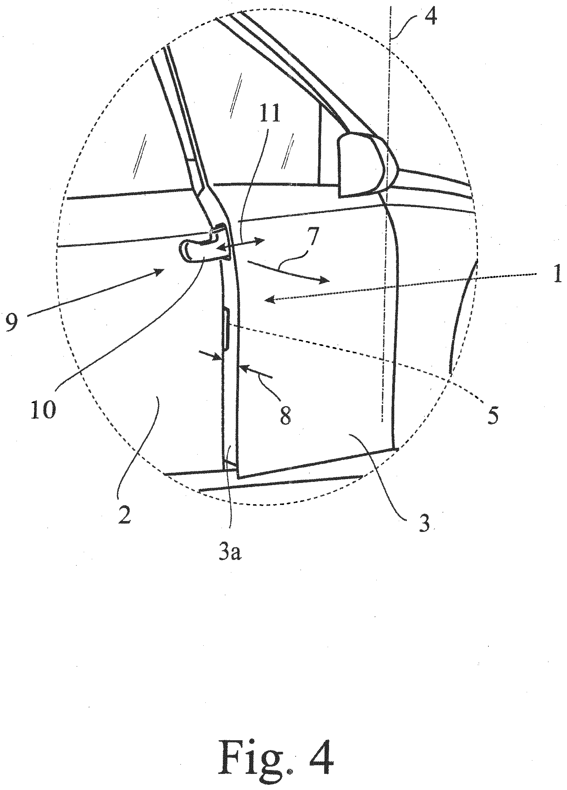

Vorliegend dient der Eingriffsspalt 8 der Bereitstellung einer Eingriffsfläche für die Hand eines Benutzers, um das Verschlusselement 3 manuell verstellen zu können. Bei dem in Fig. 1 dargestellten und insoweit bevorzugten Ausführungsbeispiel ist hierfür eine Handeingriffsanordnung 9 vorgesehen, die, wie in Fig. 1b gezeigt, durch den Eingriffsspalt 8 hindurch von außen zugänglich ist. Alternativ dazu kann es allerdings auch vorgesehen sein, dass durch den Eingriffsspalt 8 hindurch ein Griffteil 10 einer Handeingriffsanordnung 9 nach außen verstellbar ist, wie in Fig. 4 angedeutet ist. Die Richtung der Verstellung des Griffteils 10 ist in Fig. 4 mit dem Bezugszeichen 11 angedeutet.

Bei dem in den Fig. 2 und 3 dargestellten Ausführungsbeispiel dient der Verstellantrieb 6 der Verstellung einer Komponente, hier einer Schlossfalle 12, des Kraftfahrzeugschlosses 5, so dass der oben angesprochene Aufstellvorgang auf eine Verstellung der Komponente, nämlich der Schlossfalle 12, zurückgeht.

Alternativ dazu könnte es vorgesehen sein, dass ein mit der Schlossfalle 12 zusammenwirkender Schließkeil 13 o. dgl. der Kraftfahrzeugschlossanordnung 1, der mit dem Kraftfahrzeugschloss 5 zur Übertragung von Türhaltekräften in Eingriff bringbar ist, mittels des Verstellantriebs 6 verstellbar ist, um den Aufstellvorgang umzusetzen.

Das Kraftfahrzeugschloss 5 ist hier, wie oben angedeutet, mit einer Schlossfalle 12 ausgestattet, die aus einer in Fig. 3a gezeigten Offenstellung heraus durch eine Verstellung in Schließrichtung, in Fig. 3 durch eine Verstellung im Uhrzeigersinn, in mindestens eine Schließstellung, hier in eine Hauptschließstellung (Fig. 2b) und in eine Vorschließstellung (Fig. 2a) bringbar ist. In den Schließstellungen steht die Schlossfalle 12 mit einem oben angesprochenen Schließkeil 13 o. dgl. zur Übertragung von Türhaltekräften in Eingriff. Die Türhaltekräfte wirken auf das Verschlusselement 3 in dessen Schließrichtung, um einem Öffnen des Verschlusselements 3 entgegenzuwirken.

Umgekehrt ist die Schlossfalle 12 aus den Schließstellungen heraus (Fig. 2a,b) durch eine Verstellung in Öffnungsrichtung, in Fig. 2 im Gegenuhrzeigersinn, in die Offenstellung (Fig. 3a) bringbar, in der die Schlossfalle 12 den Schließkeil 13 in Öffnungsrichtung 7 des Verschlusselements 3 freigibt. Interessant dabei ist die Tatsache, dass die Schlossfalle 12 mittels des Verstellantriebs 6 in dem Aufstellvorgang zur Erzeugung der Spaltstellung des Verschlusselements 3 motorisch in ihrer Öffnungsrichtung, in Fig. 3 im Gegenuhrzeigersinn, in eine entsprechende Spaltstellung der Schlossfalle 12 (Fig. 3b) verstellbar ist.

Es lässt sich den Darstellungen gemäß Fig. 2 und 3 entnehmen, dass eine der Schlossfalle 12 zugeordnete Sperrklinke 14 vorgesehen ist, die in die in Fig. 2 gezeigte Sperrstellung bringbar ist, in der sie die Schlossfalle 12 in einer Schließstellung, in Fig. 2a in der Vorschließstellung und in Fig. 2b in der Hauptschließstellung, gegen ein Schwenken in Öffnungsrichtung der Schlossfalle 12 sperrt. Ferner lässt sich die Sperrklinke 14, hier und vorzugsweise motorisch, in eine Freigabestellung ausheben, in der sie die Schlossfalle 12 in deren Öffnungsrichtung freigibt, so dass die Schlossfalle 12, in Fig. 2 in Gegenuhrzeigersinn, in ihre Offenstellung schwenken kann (Fig. 3a,b). Die Verstellung der Sperrklinke 14 in die Freigabestellung ist in Fig. 2 mit einem Schwenken der Sperrklinke 14 im Gegenuhrzeigersinn verbunden.

Während die Sperrklinke 14 auf die Schlossfalle 12, in der Zeichnung im Uhrzeigersinn, federvorgespannt ist, drängt die Schlossfalle 12, ebenfalls federvorgespannt, in ihre Offenstellung, in der Zeichnung im Gegenuhrzeigersinn. Die hierfür erforderlichen Federanordnungen sind im Sinne einer übersichtlichen Darstellung hier nicht gezeigt.

Aufgrund des Eingriffs zwischen der Schlossfalle 12 und dem Schließkeil 13 sorgt die in der Fig. 2b gezeigte Hauptschließstellung der Schlossfalle 12 dafür, dass das Verschlusselement 3 in einer entsprechenden, in Fig. 1a gezeigten Hauptschließstellung steht. Gleiches gilt für die in der Vorschließstellung befindliche Schlossfalle 12 (Fig. 2a), die dafür sorgt, dass das Verschlusselement 3 in einer entsprechenden, hier nicht dargestellten Vorschließstellung steht. Üblicherweise verbleibt in Öffnungsrichtung 7 gesehen ein Spalt zwischen dem Verschlusselement 3 und der Kraftfahrzeugkarosserie 2 von weniger als 10mm, vorzugsweise von etwa 6mm, wenn sich die Schlossfalle 12 in der in Fig. 2a gezeigten Vorschließstellung befindet. Dieser Spalt ist also gerade so bemessen, dass der Spalt von der Hand eines Benutzers nicht hintergriffen werden kann, was mit einem beträchtlichen Einklemmrisiko einhergehen würde.

In besonders bevorzugter Ausgestaltung ist das Verschlusselement 3 mittels des Verstellantriebs 6 in einem Zuziehvorgang motorisch in Schließrichtung verstellbar, so dass das Verschlusselement 3 von der oben angesprochenen Vorschließstellung in die oben angesprochene Hauptschließstellung überführt wird. Mit dieser Komfortfunktion muss der Benutzer das Verschlusselement 3 für den Schließvorgang lediglich in die Vorschließstellung verstellen (Fig. 2a), aus der heraus der Verstellantrieb 6 das Verschlusselement 3 dann von der Vorschließstellung in die Hauptschließstellung verstellt und dabei den vergleichsweise hohen Türdichtungsdruck übernimmt.

Vorzugsweise ist es so, dass die Vorschließstellung des Verschlusselements 3 zwischen der Hauptschließstellung (Fig. 1a) und der Spaltstellung (Fig. 1b) des Verschlusselements 3 liegt. Dies bedeutet, dass der auf die Spaltstellung des Verschlusselements 3 zurückgehende Eingriffsspalt 8 größer ist als der oben angesprochene, der Vorschließstellung entsprechende Spalt zwischen Verschlusselement 3 und Kraftfahrzeugkarosserie 2. Vorzugsweise ist die Spaltbreite des Eingriffsspalts 8 größer als 18mm und weiter vorzugsweise größer als 22mm. In besonders bevorzugter Ausgestaltung liegt die Spaltbreite des Eingriffsspalts 8 zwischen etwa 26mm und etwa 31mm. Diese Werte haben sich insbesondere für das Hintergreifen des Eingriffsspalts 8 durch die Hand eines Benutzers als vorteilhaft herausgestellt.

Hier und vorzugsweise gehen sowohl der obige Zuziehvorgang als auch der obige Aufstellvorgang auf eine motorische Verstellung der Schlossfalle 12 zurück. Im Einzelnen ist die Schlossfalle 12 mittels des Verstellantriebs 6 in dem Zuziehvorgang motorisch in Schließrichtung der Schlossfalle 12 verstellbar derart, dass die Schlossfalle 12 das Verschlusselement 3 über den Schließkeil 13 o. dgl. in die Hauptschließstellung des Verschlusselements 3 zieht. Zusätzlich ist es so, dass die Schlossfalle 12 mittels des Verstellantriebs 6 in dem Aufstellvorgang motorisch in Öffnungsrichtung der Schlossfalle 12 verstellbar ist derart, dass die Schlossfalle 12 das Verschlusselement 3 über den Schließkeil 13 o. dgl. in die Spaltstellung des Verschlusselements 3 drückt. Grundsätzlich kann es auch vorgesehen sein, dass nur einer der beiden oben genannten Vorgänge auf eine motorische Verstellung der Schlossfalle 12 zurückgeht.

Eine Zusammenschau der Fig. 2 mit der Fig. 3 zeigt, dass die Offenstellung der Schlossfalle 12 (Fig. 3a) zwischen der Schließstellung bzw. den Schließstellungen der Schlossfalle 12 (Fig. 2) einerseits und der Spaltstellung der Schlossfalle 12 (Fig. 3b) andererseits liegt. Hier wird deutlich, dass der Schlossfalle 12 für die Umsetzung der Spaltstellung des Verschlusselements 3 eine neue Stellung, nämlich ebenfalls eine in Fig. 3b gezeigte Spaltstellung zugeordnet ist.

Fig. 3 zeigt weiter, dass die Schlossfalle 12 zwischen ihrer Offenstellung und ihrer Spaltstellung unidirektional mit dem Schließkeil 13 o. dgl. in Eingriff steht oder bringbar ist derart, dass eine Kraftwirkung von der Schlossfalle 12 auf den Schließkeil 13 ausschließlich in Öffnungsrichtung des Verschlusselements 3 möglich ist. Im Einzelnen ist mittels des Verstellantriebs 6 eine Antriebskraft ausschließlich in Öffnungsrichtung des Verschlusselements 3 von der Schlossfalle 12 auf den Schließkeil 13 o. dgl. ausübbar. Vorteilhaft ist dabei die Tatsache, dass ein auf den Verstellantrieb 6 zurückgehendes Einklemmrisiko in diesem Verstellbereich der Schlossfalle 12 nicht besteht.

Bei dem dargestellten und insoweit bevorzugten Ausführungsbeispiel ist die Schlossfalle 12 für die Umsetzung des Zuziehvorgangs in der einen Schwenkrichtung, in Fig. 3 im Uhrzeigersinn, und für die Umsetzung des Aufstellvorgangs in die andere Schwenkrichtung, in Fig. 2 in Gegenuhrzeigersinn, verstellbar. Entsprechend ist es so, dass die Schlossfalle 12 mittels des Verstellantriebs 6 bidirektional verstellbar ist, um beide Vorgänge umsetzen zu können.

In besonders bevorzugter Ausgestaltung ist es vorgesehen, dass der Verstellweg des Verschlusselements 3 beim Zuziehvorgang kürzer ist als beim Aufstellvorgang. Hier wird davon ausgegangen, dass der Zuziehvorgang eine Verstellung der Schlossfalle 12 von der Vorschließstellung in die Hauptschließstellung umfasst, während der Aufstellvorgang eine Verstellung der Schlossfalle 12 von ihrer Offenstellung in ihre Spaltstellung umfasst.

Der Formgebung der Schlossfalle 12 kommt für die Realisierung des Aufstellvorgangs ganz besondere Bedeutung zu. Hier und vorzugsweise weist die Schlossfalle 12 ein Einlaufmaul 15 für den Schließkeil 13 auf, wobei die Schlossfalle 12 den Schließkeil 13 während des Aufstellvorgangs in Öffnungsrichtung 7 des Verschlusselements 3 drückt. Dies ergibt sich aus dem Übergang von Fig. 3a auf Fig. 3b. Bei dem dargestellten und insoweit bevorzugten Ausführungsbeispiel ist die Schlossfalle 12 so ausgestaltet, dass sie den Schließkeil 13 während des Aufstellvorgangs aus dem Einlaufmaul 15 herausdrückt. Hierfür schließt sich an einen inneren Teil des Einlaufmauls 15, insbesondere an eine Wand 16 des Einlaufmauls 15, eine Antriebskontur 17 an, die bei einer Verstellung der Schlossfalle 12 von der Offenstellung in die Spaltstellung in antriebstechnischen Eingriff mit dem Schließkeil 13, den Schließkeil 13 in Öffnungsrichtung des Verschlusselements 3 drückend, kommt. Diese Art des Antriebs des Schließkeils 13 in Öffnungsrichtung 7 des Verschlusselements 3 ist konstruktiv besonders einfach und damit kostengünstig umsetzbar.

Für den Verstellantrieb 6 sind zahlreiche konstruktive Ausgestaltungen denkbar. Hier und vorzugsweise ist die Schlossfalle 12 mit einem Mitnehmer 18 ausgestattet, der mit einem motorisch antreibbaren Antriebsteil 19 in antriebstechnischen Eingriff bringbar ist. Bei dem dargestellten und insoweit bevorzugten Ausführungsbeispiel ist das Antriebsteil 19 als Zylinderabschnitt mit einem kreissegmentförmigen Querschnitt ausgestaltet. Das Antriebsteil 19 ist um eine geometrische Schwenkachse 12a schwenkbar, bei der es sich um die geometrische Schwenkachse 12a der Schlossfalle 12 handelt. Dem Antriebsteil 19 ist ein hier und vorzugsweise bidirektional arbeitender, insbesondere elektrischer, Antriebsmotor 20 zugeordnet, der in der Zeichnung lediglich angedeutet ist. Bei einem Verschwenken des Antriebsteils 19 kommt das Antriebsteil 19 in beiden Antriebsrichtungen in Eingriff mit dem Mitnehmer 18, so dass sich die Schlossfalle 12 mittels des Verstellantriebs 6 in beiden Schwenkrichtungen schwenken lässt. Entsprechend lässt sich eine Verstellung der Schlossfalle 12 von der in Fig. 2a dargestellten Vorschließstellung in die in Fig. 2b gezeigte Hauptschließstellung dadurch realisieren, dass das Antriebsteil 19 motorisch im Uhrzeigersinn verschwenkt wird. Umgekehrt lässt sich eine Verstellung der Schlossfalle 12 von der in Fig. 3a gezeigten Offenstellung in die in Fig. 3b gezeigte Spaltstellung dadurch bewerkstelligen, dass das Antriebsteil 19 motorisch im Gegenuhrzeigersinn verschwenkt wird.

Interessant bei der Ausgestaltung von Mitnehmer 18 und Antriebsteil 19 ist die Tatsache, dass zwischen diesen beiden Komponenten ein Freilauf vorgesehen ist, so dass beispielsweise eine Verstellung der Schlossfalle 12 von ihrer Offenstellung in ihre Vorschließstellung und auch in ihre Hauptschließstellung möglich ist, ohne dass der Mitnehmer 18 antriebstechnisch auf das Antriebsteil 19 wirkt. Damit ist ein manuelles Zuschlagen des Verschlusselements 3 unbeeinflusst vom Verstellantrieb 6 möglich. Umgekehrt lässt sich bei geeigneter Ansteuerung des Verstellantriebs 6 auch sicherstellen, dass eine Verstellung der Schlossfalle 12 von der Hauptschließstellung über die Vorschließstellung in die Offenstellung unbeeinflusst vom Verstellantrieb 6 erfolgt. Dies ist in der Zeichnung allerdings nicht dargestellt.

Vorzugsweise ist der Kraftfahrzeugschlossanordnung 1 eine Steuerungsanordnung 21 zugeordnet, mittels der ein Öffnungsvorgang der Kraftfahrzeugschlossanordnung 1 steuerbar ist. Ein solcher Öffnungsvorgang kann durch eine Betätigung eines Funkschlüssels, durch einen unterhalb der Türaußenhaut angeordneten Sensor o. dgl. ausgelöst werden.

Mittels der Steuerungsanordnung 21 ist im Rahmen eines Öffnungsvorgangs des Verschlusselements 3 ein motorischer Aufstellvorgang steuerbar, in dem das Verschlusselement 3 mittels des Verstellantriebs 6 aus einer Schließstellung heraus in die Spaltstellung verstellt wird und dadurch ein Eingriffsspalt 8 zwischen Verschlusselement 3 und Kraftfahrzeugkarosserie 2 erzeugt wird, wobei das das Verschlusselement 3 nach dem motorischen Aufstellvorgang, insbesondere frei von dem Verstellantrieb 6, manuell weiter in Öffnungsrichtung des Verschlusselements 3 verstellbar ist.

Die Steuerungsanordnung 21 kann grundsätzlich ausschließlich der Ansteuerung des oben angesprochenen Verstellantriebs 6 dienen. Hier und vorzugsweise ist der Sperrklinke 14 allerdings ein eigener Öffnungshilfsantrieb 22 zugeordnet, der vorzugsweise ebenfalls von der Steuerungsanordnung 21 angesteuert wird. Im Rahmen eines Öffnungsvorgangs ist es dann vorzugsweise vorgesehen, dass zunächst die Sperrklinke 14, insbesondere mittels des Öffnungshilfsantriebs 22, ausgehoben wird und das Verschlusselement 3 anschließend mittels des oben angesprochenen Verstellantriebs 6 zur Erzeugung einer Spaltstellung des Verschlusselements 3 motorisch in Öffnungsrichtung 7 des Verschlusselements 3 verstellt wird. Der Synchronisierung von Öffnungshilfsantrieb 22 und Verstellantrieb 6 kommt hier besondere Bedeutung zu. Insbesondere ist darauf zu achten, dass das Ausheben der Sperrklinke 14 vor dem Anlaufen des Verstellantriebs 6 von statten geht.

Schließlich darf zu der erstgenannten Lehre darauf hingewiesen werden, dass es sich bei dem Verstellantrieb 6 hier und vorzugsweise um einen elektromotorischen Verstellantrieb handelt. Es ist aber auch denkbar, dass es sich bei dem Verstellantrieb 6 um einen pneumatischen, hydraulischen, elektromagnetischen o. dgl. Verstellantrieb handelt. Weiter ist es denkbar, dass der Verstellantrieb 6 sowohl die Funktion der motorischen Verstellung der Schlossfalle 12 als auch die Funktion des motorischen Aushebens der Sperrklinke 14 übernehmen kann, was zu einer kompakten und kostengünstigen Ausgestaltung führen kann.

Nach einer weiteren Lehre, der eigenständige Bedeutung zukommt, wird eine Verschlusselementanordnung 23 mit einem oben angesprochenen Verschlusselement 3, das mit der Kraftfahrzeugkarosserie 2 verstellbar gekoppelt ist, und einer dem Verschlusselement 3 zugeordneten Kraftfahrzeugschlossanordnung 1 beansprucht.

Vorschlagsgemäß ist am Verschlusselement 3 eine Handeingriffsanordnung 9 vorgesehen, die bei in einer Schließstellung befindlichem Verschlusselement 3 durch das Zusammenwirken von Verschlusselement 3 und Kraftfahrzeugkarosserie 2 nicht zugänglich (Fig.1a) und bei in der Spaltstellung befindlichem Verschlusselement 3, hier und vorzugsweise durch den Eingriffsspalt 8 hindurch, zugänglich ist (Fig. 1b, Fig. 4). Fig. 1a zeigt, dass die Handeingriffsanordnung 9 bei in der Hauptschließstellung befindlichem Verschlusselement 3 durch das Verschlusselement 3 einerseits und die Kraftfahrzeugkarosserie 2 andererseits geschützt, insbesondere abgedeckt, ist. Bei geeigneter Auslegung kann dies sogar dazu führen, dass die Handeingriffsanordnung 9 nach außen hin abgedichtet ist, so dass die Handeingriffsanordnung 9 stets vor Schmutz und Nässe geschützt ist.

Bei der in Fig. 1b gezeigten, bevorzugten Variante für die Handeingriffsanordnung 9 ist es so, dass die Handeingriffsanordnung 9 im Bereich der an dem Eingriffsspalt 8 angrenzenden Stirnseite 3a des Verschlusselements 3 angeordnet ist. Die Definition des Begriffs "Stirnseite" wurde weiter oben bereits erläutert. Hier und vorzugsweise ist die Handeingriffsanordnung 9 im Bereich der Seite des als Seitentür ausgestalteten Verschlusselements 3 angeordnet, die zum Heck des Kraftfahrzeugs weist. Dies ist in Fig. 1 zu erkennen.

Im einfachsten und in Fig. 1b dargestellten Fall ist die Handeingriffsanordnung 9 im Wesentlichen eine Fläche, die der Benutzer mit seiner Hand durch ein Hintergreifen des Eingriffsspalts 8 erreichen kann.

Alternativ kann es auch vorgesehen sein, dass die Handeingriffsanordnung 9 ein oben angesprochenes Griffteil 10 aufweist, dass durch den Eingriffsspalt 8 hindurch nach außen verstellbar ist. Fig. 4 zeigt, dass dieses Griffteil 10 in der Verstellrichtung 11 verstellbar ist. Für diese Verstellung ist dem Griffteil 10 vorzugsweise ein eigener, hier nicht dargestellter Antrieb zugeordnet.

Nach einer weiteren Lehre, der ebenfalls eigenständige Bedeutung zukommt, wird ein Verfahren für den Betrieb einer vorschlagsgemäßen Kraftfahrzeugschlossanordnung 1 beansprucht.

Wesentlich nach der weiteren Lehre ist, dass eine oben angesprochene Steuerungsanordnung 21 vorgesehen ist, mittels der ein Öffnungsvorgang steuerbar ist. Dabei wird mittels der Steuerungsanordnung 21 im Rahmen eines Öffnungsvorgangs ein motorischer Aufstellvorgang gesteuert, in dem das Verschlusselement 3 mittels des Verstellantriebs 6 aus einer Schließstellung heraus in die Spaltstellung verstellt und dadurch ein Eingriffsspalt 8 zwischen Verschlusselement 3 und Kraftfahrzeugkarosserie 2 erzeugt wird.

Nach dem motorischen Aufstellvorgang ist es weiter vorzugsweise so, dass das Verschlusselement 3 manuell weiter in Öffnungsrichtung des Verschlusselements 3 verstellt wird.

Vorzugsweise wird im Rahmen eines Öffnungsvorgangs die Sperrklinke 14 insbesondere mittels eines obigen Öffnungshilfsantriebs 22 ausgehoben. Das Verschlusselement 3 wird anschließend mittels des Verstellantriebs 6 in dem motorischen Aufstellvorgang aus einer Schließstellung heraus in eine Spaltstellung verstellt. In einer besonders bevorzugten Variante kann es zusätzlich vorgesehen sein, dass anschließend ein oben angesprochenes Griffteil 10 durch den Eingriffsspalt 8 hindurch nach außen verstellt wird. Auf alle Ausführungen zu der vorschlagsgemäßen Kraftfahrzeugschlossanordnung 1 darf verwiesen werden.

## Patentansprüche

1. Kraftfahrzeugschlossanordnung für ein mit einer Kraftfahrzeugkarosserie (2) verstellbar gekoppeltes Verschlusselement (3), wobei ein Kraftfahrzeugschloss (5) vorgesehen ist, das im montierten Zustand an dem Verschlusselement (3) oder an der Kraftfahrzeugkarosserie (2) angeordnet ist, wobei die Kraftfahrzeugschlossanordnung (1), insbesondere das Kraftfahrzeugschloss (5), einen Verstellantrieb (6) zur Ausübung einer Antriebskraft auf das Verschlusselement (3) in dessen Öffnungsrichtung aufweist, so dass das Verschlusselement (3) in einem motorischen Aufstellvorgang aus einer Schließstellung heraus in eine Spaltstellung verstellbar ist und dadurch ein Eingriffsspalt (8) zwischen Verschlusselement (3) und Kraftfahrzeugkarosserie (2) erzeugbar ist, wobei das Kraftfahrzeugschloss (5) eine Schlossfalle (12) aufweist, wobei die Schlossfalle (12) aus einer Offenstellung heraus durch eine Verstellung in Schließrichtung der Schlossfalle (12) in mindestens eine Schließstellung, insbesondere in eine Hauptschließstellung und in eine Vorschließstellung, bringbar ist, in der die Schlossfalle (12) mit einem Schließkeil (13) o. dgl. zur Übertragung von Türhaltekräften in Eingriff steht und wobei die Schlossfalle (12) aus der Schließstellung bzw. aus den Schließstellungen heraus durch eine Verstellung in Öffnungsrichtung der Schlossfalle (12) in die Offenstellung bringbar ist, in der die Schlossfalle (12) den Schließkeil (13) o. dgl. in Öffnungsrichtung (7) des Verschlusselements (3) freigibt, wobei die Schlossfalle (12) in ihre Offenstellung federvorgespannt ist, wobei die Schlossfalle (12) mittels des Verstellantriebs (6) in dem Aufstellvorgang zur Erzeugung der Spaltstellung des Verschlusselements (3) motorisch in Öffnungsrichtung der Schlossfalle (12) in eine Spaltstellung der Schlossfalle (12) verstellbar ist, wobei die Offenstellung der Schlossfalle (12) zwischen der Schließstellung bzw. den Schließstellungen der Schlossfalle (12) einerseits und der Spaltstellung der Schlossfalle (12) andererseits liegt
**dadurch gekennzeichnet,**
**dass** der Verstellantrieb (6) von einem Schlossgehäuse des Kraftfahrzeugschlosses (5) aufgenommen ist, das auch die Schlossfalle (12) aufnimmt.

2. Kraftfahrzeugschlossanordnung nach Anspruch 1, **dadurch gekennzeichnet, dass** das Verschlusselement (3) nach dem motorischen Aufstellvorgang frei von dem Verstellantrieb (6) manuell weiter in Öffnungsrichtung (7) des Verschlusselements (3) verstellbar ist.

3. Kraftfahrzeugschlossanordnung nach Anspruch 1 oder 2, **dadurch gekennzeichnet, dass** durch den Eingriffsspalt (8) hindurch eine Handeingriffsanordnung (9) am Verschlusselement (3) von außen zugänglich ist, und/oder, dass durch den Eingriffsspalt (8) hindurch ein Griffteil (10) einer Handeingriffsanordnung (9) nach außen verstellbar ist.

4. Kraftfahrzeugschlossanordnung nach einem der vorhergehenden Ansprüche, **dadurch gekennzeichnet, dass** eine Sperrklinke (14) vorgesehen ist, die in eine Sperrstellung bringbar ist, in der sie die Schlossfalle (12) in der Schließstellung bzw. in mindestens einer der Schließstellungen sperrt, und die in eine Freigabestellung bringbar ist, in der sie die Schlossfalle (12) in Öffnungsrichtung der Schlossfalle (12) freigibt.

5. Kraftfahrzeugschlossanordnung nach einem der vorhergehenden Ansprüche, **dadurch gekennzeichnet, dass** das Verschlusselement (3) mittels des Verstellantriebs (6) in einem Zuziehvorgang motorisch in Schließrichtung verstellbar ist, so dass das Verschlusselement (3) von einer Vorschließstellung in eine Hauptschließstellung überführt wird, vorzugsweise, dass die Vorschließstellung des Verschlusselements (3) zwischen der Hauptschließstellung und der Spaltstellung des Verschlusselements (3) liegt.

6. Kraftfahrzeugschlossanordnung nach Anspruch 5, **dadurch gekennzeichnet, dass** die Schlossfalle (12) mittels des Verstellantriebs (6) in einem Zuziehvorgang motorisch in Schließrichtung der Schlossfalle (12) verstellbar ist derart, dass die Schlossfalle (12) das Verschlusselement (3) über den Schließkeil (13) o. dgl. in die Hauptschließstellung des Verschlusselements (3) zieht.

7. Kraftfahrzeugschlossanordnung nach einem der vorhergehenden Ansprüche, **dadurch gekennzeichnet, dass** die Schlossfalle (12) mittels des Verstellantriebs (6) in dem Aufstellvorgang motorisch in Öffnungsrichtung der Schlossfalle (12) verstellbar ist derart, dass die Schlossfalle (12) das Verschlusselement (3) über den Schließkeil (13) o. dgl. in die Spaltstellung des Verschlusselements (3) drückt.

8. Kraftfahrzeugschlossanordnung nach Anspruch 7, **dadurch gekennzeichnet, dass** die Schlossfalle (12) zwischen ihrer Offenstellung und ihrer Spaltstellung unidirektional mit dem Schließkeil (13) o. dgl. in Eingriff steht oder bringbar ist derart, dass mittels des Verstellantriebs (6) eine Antriebskraft ausschließlich in Öffnungsrichtung des Verschlusselements (3) von der Schlossfalle (12) auf den Schließkeil (13) o. dgl. ausübbar ist.

9. Kraftfahrzeugschlossanordnung nach einem der vorhergehenden Ansprüche, **dadurch gekennzeichnet, dass** die Schlossfalle (12) mittels des Verstellantriebs (6) bidirektional verstellbar ist.

10. Kraftfahrzeugschlossanordnung nach einem der vorhergehenden Ansprüche, **dadurch gekennzeichnet, dass** die Schlossfalle (12) ein Einlaufmaul (15) für den Schließkeil (13) o. dgl. aufweist und dass die Schlossfalle (12) den Schließkeil (13) o. dgl. während des Aufstellvorgangs in Öffnungsrichtung des Verschlusselements (3) drückt, insbesondere aus dem Einlaufmaul (15) herausdrückt.

11. Kraftfahrzeugschlossanordnung nach einem der vorhergehenden Ansprüche, **dadurch gekennzeichnet, dass** eine Steuerungsanordnung (21) vorgesehen ist, mittels der ein Öffnungsvorgang des Verschlusselements (3) steuerbar ist und dass mittels der Steuerungsanordnung (21) im Rahmen eines Öffnungsvorgangs ein motorischer Aufstellvorgang steuerbar ist, in dem das Verschlusselement (3) mittels des Verstellantriebs (6) aus einer Schließstellung heraus in die Spaltstellung verstellt wird und dadurch ein Eingriffsspalt (8) zwischen Verschlusselement (3) und Kraftfahrzeugkarosserie (2) erzeugt wird und dass das Verschlusselement (3) nach dem motorischen Aufstellvorgang manuell weiter in Öffnungsrichtung des Verschlusselements (3) verstellbar ist.

12. Verschlusselementanordnung mit einem Verschlusselement (3), das mit einer Kraftfahrzeugkarosserie (2) verstellbar gekoppelt ist, und einer dem Verschlusselement (3) zugeordneten Kraftfahrzeugschlossanordnung (1) nach einem der Ansprüche 1 bis 11,
**dadurch gekennzeichnet,**
**dass** am Verschlusselement (3) eine Handeingriffsanordnung (9) vorgesehen ist, die bei in einer Schließstellung befindlichem Verschlusselement (3) durch das Zusammenwirken von Verschlusselement (3) und Kraftfahrzeugkarosserie (2) nicht zugänglich ist und bei in der Spaltstellung befindlichem Verschlusselement (3), insbesondere durch den Eingriffsspalt (8) hindurch, zugänglich ist.

13. Verschlusselementanordnung nach Anspruch 12, **dadurch gekennzeichnet, dass** die Handeingriffsanordnung (9) im Bereich der an den Eingriffsspalt (8) angrenzenden Stirnseite (3a) des Verschlusselements (3) angeordnet ist.

14. Verschlusselementanordnung nach Anspruch 12 oder 13, **dadurch gekennzeichnet, dass** die Handeingriffsanordnung (9) ein Griffteil (10) aufweist, das durch den Eingriffsspalt (8) hindurch nach außen verstellbar ist.

15. Verfahren für den Betrieb einer Kraftfahrzeugschlossanordnung (1) nach einem der Ansprüche 1 bis 11,
**dadurch gekennzeichnet,**
**dass** eine Steuerungsanordnung (21) vorgesehen ist, mittels der ein Öffnungsvorgang des Verschlusselements (3) steuerbar ist und dass mittels der Steuerungsanordnung (21) im Rahmen eines Öffnungsvorgangs ein motorischer Aufstellvorgang gesteuert wird, in dem das Verschlusselement (3) mittels des Verstellantriebs (6) aus einer Schließstellung heraus in die Spaltstellung verstellt wird und dadurch ein Eingriffsspalt (8) zwischen Verschlusselement (3) und Kraftfahrzeugkarosserie (2) erzeugt wird.

16. Verfahren nach Anspruch 15, **dadurch gekennzeichnet, dass** das Verschlusselement (3) nach dem motorischen Aufstellvorgang manuell weiter in Öffnungsrichtung des Verschlusselements (3) verstellt wird.

17. Verfahren nach Anspruch 15 oder 16, **dadurch gekennzeichnet, dass** die Sperrklinke (14) insbesondere mittels eines Öffnungshilfsantriebs (22) ausgehoben wird und das Verschlusselement (3) anschließend mittels des Verstellantriebs (6) in dem motorischen Aufstellvorgang aus einer Schließstellung heraus in die Spaltstellung verstellt wird.

## Claims

1. Motor vehicle lock arrangement for a closure element (3) which is adjustably coupled to a motor vehicle body (2), wherein a motor vehicle lock (5) is provided which, when mounted, is arranged on the closure element (3) or on the motor vehicle body (2), wherein the motor vehicle lock arrangement (1), in particular the motor vehicle lock (5), has a servo drive (6) for exerting a driving force on the closure element (3) in its opening direction, so that the closure element (3) can be adjusted in a motorized positioning process from a closed position into a gap position and thus an engagement gap (8) between the closure element (3) and the motor vehicle body (2) can be created, wherein the motor vehicle lock (5) has a latch bolt (12), wherein the latch bolt (12) can be brought out of an open position by a movement in the closing direction of the latch bolt (12) into at least one closed position, especially a main closed position and a pre-closed position, in which the latch bolt (12) engages with a striker (13) or the like for the transmission of door holding forces, and wherein the latch bolt (12) can be brought out from the closed position or closed positions by a movement in the opening direction of the latch bolt (12) into the open position, in which the latch bolt (12) releases the striker (13) or the like in the opening direction (7) of the closure element (3), wherein the latch bolt (12) is spring-loaded towards its open position, wherein the latch bolt (12) is adjustable by means of the servo drive (6) in the positioning process for creating the gap position of the closure element (3) in motorized manner in the opening direction of the latch bolt (12) into a gap position of the latch bolt (12), wherein the open position of the latch bolt (12) lies between the closed position, or the closed positions, of the latch bolt (12) on the one hand, and the gap position of the latch bolt (12) on the other hand,
**characterized in that**
the servo drive (6) is received by a lock housing of the motor vehicle lock (5), which also receives the latch bolt (12).

2. Motor vehicle lock arrangement according to Claim 1, **characterized in that** the closure element (3), after the motorized positioning process, is adjustable manually, free of the servo drive (6), further in the opening direction (7) of the closure element (3).

3. Motor vehicle lock arrangement according to Claim 1 or 2, **characterized in that** a hand engagement arrangement (9) on the closure element (3) is accessible from the outside through the engagement gap (8), and/or **in that** a handle (10) of a hand engagement arrangement (9) is adjustable outwardly through the engagement gap (8).

4. Motor vehicle lock arrangement according to one of the preceding claims, **characterized in that** a locking pawl (14) is provided, which can be brought into a locked position, in which it locks the latch bolt (12) in the closed position or in at least one of the closed positions, and which can be brought into a release position in which it releases the latch bolt (12) in the opening direction of the latch bolt (12).

5. Motor vehicle lock arrangement according to one of the preceding claims, **characterized in that** the closure element (3) is adjustable by means of the servo drive (6) in a pulling shut process in motorized manner in the closing direction, so that the closure element (3) is taken from a pre-closed position into a main closed position, and preferably **in that** the pre-closed position of the closure element (3) lies between the main closed position and the gap position of the closure element (3).

6. Motor vehicle lock arrangement according to Claim 5, **characterized in that** the latch bolt (12) is adjustable by means of the servo drive (6) in a pulling shut process in motorized manner in the closing direction of the latch bolt (12) in such a way that the latch bolt (12) pulls the closure element (3) via the striker (13) or the like into the main closed position of the closure element (3).

7. Motor vehicle lock arrangement according to one of the preceding claims, **characterized in that** the latch bolt (12) is adjustable by means of the servo drive (6) in the positioning process in motorized manner in the opening direction of the latch bolt (12) in such a way that the latch bolt (12) pushes the closure element (3) via the striker (13) or the like into the gap position of the closure element (3).

8. Motor vehicle lock arrangement according to Claim 7, **characterized in that** the latch bolt (12) stands or can be brought into engagement unidirectionally with the striker (13) or the like between its open position and its gap position such that a driving force of the latch bolt (12) on the striker (13) or the like can be exerted only in the opening direction of the closure element (3) by means of the servo drive (6).

9. Motor vehicle lock arrangement according to one of the preceding claims, **characterized in that** the latch bolt (12) is adjustable bidirectionally by means of the servo drive (6).

10. Motor vehicle lock arrangement according to one of the preceding claims, **characterized in that** the latch bolt (12) comprises an inlet opening (15) for the striker (13) or the like, and **in that** the latch bolt (12) pushes the striker (13) or the like during the positioning process in the opening direction of the closure element (3), especially out from the inlet opening (15).

11. Motor vehicle lock arrangement according to one of the preceding claims, **characterized in that** a control arrangement (21) is provided, by means of which an opening process of the closure element (3) can be controlled, and **in that** by means of the control arrangement (21) in the course of an opening process a motorized positioning process can be controlled **in that** the closure element (3) is adjusted by means of the servo drive (6) from a closed position into the gap position and in this way an engagement gap (8) is created between closure element (3) and motor vehicle body (2), and **in that** the closure element (3), after the motorized positioning process, is adjustable manually further in the opening direction of the closure element (3).

12. Closure element arrangement with a closure element (3), which is adjustably coupled to a motor vehicle body (2), and with a motor vehicle lock arrangement (1) associated with the closure element (3) according to one of Claims 1 to 11,
**characterized in that**
a hand engagement arrangement (9) is provided on the closure element (3), which is not accessible when the closure element (3) is in a closed position owing to the interaction of closure element (3) and motor vehicle body (2) and which is accessible especially through the engagement gap (8) when the closure element (3) is in the gap position.

13. Closure element arrangement according to Claim 12, **characterized in that** the hand engagement arrangement (9) is arranged in the region of the end face (3a) of the closure element (3) bordering on the engagement gap (8).

14. Closure element arrangement according to Claim 12 or 13, **characterized in that** the hand engagement arrangement (9) comprises a handle (10) which can be moved outward through the engagement gap (8).

15. Method for the operation of a motor vehicle lock arrangement (1) according to one of Claims 1 to 11,
**characterized in that**
a control arrangement (21) is provided, by means of which an opening process of the closure element (3) can be controlled, and **in that** by means of the control arrangement (21) in the course of an opening process a motorized positioning process is controlled **in that** the closure element (3) is adjusted by means of the servo drive (6) from a closed position into the gap position and in this way an engagement gap (8) is created between closure element (3) and motor vehicle body (2).

16. Method according to Claim 15, **characterized in that** the closure element (3), after the motorized positioning process, is adjusted manually further in the opening direction of the closure element (3).

17. Method according to Claim 15 or 16, **characterized in that** the locking pawl (14) is lifted, particularly by means of an auxiliary opening drive unit (22), and the closure element (3) is then adjusted by means of the servo drive (6) in the motorized positioning process from a closed position into the gap position.

## Revendications

1. Agencement de serrure de véhicule automobile destiné à un élément de fermeture (3) qui est accouplé de manière réglable à une carrosserie de véhicule automobile (2), une serrure de véhicule automobile (5) étant disposée à l'état monté sur l'élément de fermeture (3) ou sur la carrosserie de véhicule automobile (2), l'agencement de serrure de véhicule automobile (1), en particulier la serrure de véhicule automobile (5), présentant un entraînement de réglage (6) destiné à exercer une force d'entraînement sur l'élément de fermeture (3) dans le sens d'ouverture de celui-ci, de sorte que, lors d'une manœuvre motorisée, l'élément de fermeture (3) peut être déplacé d'une position de fermeture vers une position d'entrebâillement et qu'un interstice d'engagement (8) peut ainsi être créé entre l'élément de fermeture (3) et la carrosserie de véhicule automobile (2), la serrure de véhicule automobile (5) présentant un pêne (12), le pêne (12) pouvant être amené, par un déplacement dans le sens de fermeture du pêne (12), d'une position d'ouverture vers au moins une position de fermeture, en particulier vers une position de fermeture principale et une position de pré-fermeture, dans laquelle le pêne (12) est en prise avec une gâche (13) ou analogue, pour transmettre des forces de maintien de porte, et le pêne (12) pouvant être amené, par un déplacement dans le sens d'ouverture du pêne (12), de la position de fermeture ou des positions de fermeture à la position d'ouverture, le pêne (12) libérant la gâche (13) ou analogue dans le sens d'ouverture (7) de l'élément de fermeture (3), le pêne (12) étant précontraint par ressort dans sa position d'ouverture, le pêne (12) pouvant être déplacé de manière motorisée dans le sens d'ouverture du pêne (12) vers une position d'entrebâillement du pêne (12) au moyen de l'entraînement de réglage (6) lors de la manœuvre, créant ainsi la position d'entrebâillement de l'élément de fermeture (3), la position d'ouverture du pêne (12) se situant entre la position de fermeture ou les positions de fermeture du pêne (12), d'une part, et la position d'entrebâillement du pêne (12), d'autre part,
**caractérisé en ce que**
l'entraînement de réglage (6) est logé dans un boîtier de serrure de la serrure de véhicule automobile (5) qui reçoit également le pêne (12).

2. Agencement de serrure de véhicule automobile selon la revendication 1, **caractérisé en ce que** l'élément de fermeture (3) peut être déplacé manuellement plus avant dans le sens d'ouverture (7) de l'élément de fermeture (3), après la manœuvre motorisée, sans être être entravé par l'entraînement de réglage (6).

3. Agencement de serrure de véhicule automobile selon la revendication 1 ou 2, **caractérisé en ce qu'**un agencement de saisie manuelle (9) est accessible depuis l'extérieur sur l'élément de fermeture (3) à travers l'interstice d'engagement (8) et/ou **en ce qu'**une partie poignée (10) d'un agencement de saisie manuelle (9) peut être déplacé vers l'extérieur à travers l'interstice d'engagement (8).

4. Agencement de serrure de véhicule automobile selon l'une quelconque des revendications précédentes, **caractérisé en ce qu'**il est prévu un cliquet (14) qui peut être amené dans une position de blocage dans laquelle il bloque le pêne (12) dans la position de fermeture ou dans au moins l'une des positions de fermeture, et qui peut être amené dans une position de libération dans laquelle il libère le pêne (12) dans le sens d'ouverture du pêne (12).

5. Agencement de serrure de véhicule automobile selon l'une quelconque des revendications précédentes, **caractérisé en ce que** l'élément de fermeture (3) peut être déplacé de manière motorisée dans le sens de fermeture au moyen de l'entraînement de réglage (6) lors d'un processus de fermeture, de telle sorte que l'élément de fermeture (3) est amené à passer d'une position de pré-fermeture à une position de fermeture principale, de préférence de telle sorte que la position de pré-fermeture de l'élément de fermeture (3) se situe entre la position de fermeture principale et la position d'entrebâillement de l'élément de fermeture (3).

6. Agencement de serrure de véhicule automobile selon la revendication 5, **caractérisé en ce que** le pêne (12) peut être déplacé de manière motorisée dans le sens de fermeture du pêne (12) au moyen de l'entraînement de réglage (6), de telle sorte que le pêne (12) tire l'élément de fermeture (3) par l'intermédiaire de la gâche (13) ou analogue vers la position de fermeture principale de l'élément de fermeture (3).

7. Agencement de serrure de véhicule automobile selon l'une quelconque des revendications précédentes, **caractérisé en ce que** le pêne (12) peut être déplacé de manière motorisée dans le sens d'ouverture du pêne (12) au moyen de l'entraînement de réglage (6) lors de la manœuvre, de telle sorte que le pêne (12) pousse l'élément de fermeture (3) par l'intermédiaire de la gâche (13) ou analogue vers la position d'entrebâillement de l'élément de fermeture (3).

8. Agencement de serrure de véhicule automobile selon la revendication 7, **caractérisé en ce que** le pêne (12) est ou peut être amené en prise de manière unidirectionnelle avec la gâche (13) ou analogue entre sa position d'ouverture et sa position d'entrebâillement, de telle manière qu'au moyen de l'entraînement de réglage (6), une force d'entraînement peut être exercée par le pêne (12) sur la gâche (13) ou analogue exclusivement dans le sens d'ouverture de l'élément de fermeture (3).

9. Agencement de serrure de véhicule automobile selon l'une quelconque des revendications précédentes, **caractérisé en ce que** le pêne (12) peut être déplacé de manière bidirectionnelle au moyen de l'entraînement de réglage (6).

10. Agencement de serrure de véhicule automobile selon l'une quelconque des revendications précédentes, **caractérisé en ce que** le pêne (12) présente une embouchure d'entrée (15) pour la gâche (13) ou analogue, et **en ce que** le pêne (12) pousse la gâche (13) ou analogue dans le sens d'ouverture de l'élément de fermeture (3) pendant la manœuvre, en particulier en la faisant sortir de l'embouchure d'entrée (15).

11. Agencement de serrure de véhicule automobile selon l'une quelconque des revendications précédentes, **caractérisé en ce qu'**il est prévu un agencement de commande (21) au moyen duquel un processus d'ouverture de l'élément de fermeture (3) peut être commandé, et **en ce qu'**au moyen de l'agencement de commande (21), une manœuvre motorisée peut être commandée dans le cadre d'un processus d'ouverture, lors de laquelle l'élément de fermeture (3) est déplacé d'une position de fermeture vers la position d'entrebâillement au moyen de l'entraînement de réglage (6), créant ainsi un interstice d'engagement (8) entre l'élément de fermeture (3) et la carrosserie de véhicule automobile (2), et **en ce que** l'élément de fermeture (3) peut être déplacé manuellement plus avant dans le sens d'ouverture de l'élément de fermeture (3) après la manœuvre motorisée.

12. Agencement d'élément de fermeture comprenant un élément de fermeture (3) couplé de manière réglable à une carrosserie de véhicule automobile (2) et un agencement de serrure de véhicule automobile (1) associé à l'élément de fermeture (3) selon l'une quelconque des revendications 1 à 11,
**caractérisé en ce que**
**en ce qu'**il est prévu sur l'élément de fermeture (3) un agencement de saisie manuelle (9) qui, lorsque l'élément de fermeture (3) se trouve dans une position de fermeture, n'est pas accessible en raison de l'interaction entre l'élément de fermeture (3) et la carrosserie de véhicule automobile (2) et qui, lorsque l'élément de fermeture (3) se trouve dans la position d'entrebâillement, est accessible, en particulier à travers l'interstice d'engagement (8).

13. Agencement d'élément de fermeture selon la revendication 12, **caractérisé en ce que** l'agencement de saisie manuelle (9) est disposé dans la zone de la face frontale (3a) de l'élément de fermeture (3) qui est adjacente à l'interstice d'engagement (8).

14. Agencement d'élément de fermeture selon la revendication 12 ou 13, **caractérisé en ce que** l'agencement de saisie manuelle (9) présente une partie poignée (10) qui peut être déplacée vers l'extérieur à travers l'interstice d'engagement (8).

15. Procédé pour faire fonctionner un dispositif de serrure de véhicule automobile (1) selon l'une quelconque des revendications 1 à 11,
**caractérisé en ce que**
**en ce qu'**il est prévu un agencement de commande (21) au moyen duquel un processus d'ouverture de l'élément de fermeture (3) peut être commandé, et **en ce qu'**au moyen de l'agencement de commande (21), une manœuvre motorisée est commandée dans le cadre d'un processus d'ouverture, lors de laquelle l'élément de fermeture (3) est déplacé d'une position de fermeture vers la position d'entrebâillement au moyen de l'entraînement de réglage (6), créant ainsi un interstice d'engagement (8) entre l'élément de fermeture (3) et la carrosserie de véhicule automobile (2).

16. Procédé selon la revendication 15, **caractérisé en ce que** l'élément de fermeture (3) est déplacé manuellement plus avant dans le sens d'ouverture de l'élément de fermeture (3) après la manœuvre motorisée.

17. Procédé selon la revendication 15 ou 16, **caractérisé en ce que** le cliquet (14) est soulevé, en particulier au moyen d'un entraînement auxiliaire d'ouverture (22), et **en ce que** l'élément de fermeture (3) est ensuite déplacé d'une position de fermeture vers la position d'entrebâillement au moyen de l'entraînement de réglage (6) lors de la manœuvre motorisée.
